# EUROPÄISCHE PATENTSCHRIFT

(11) **EP 1 520 090 B1**
(45) Veröffentlichungstag und Bekanntmachung des Hinweises auf die Patenterteilung: **15.11.2006**
(21) Anmeldenummer: 03729785.0
(22) Anmeldetag: 30.06.2003
(51) Int. Cl.: F02C 6/16, H02J 3/28, H02J 3/14

(54) **VERFAHREN ZUM BETRIEB EINES KRAFTSPEICHERS - KRAFTERZEUGUNGSANLAGE**
METHOD FOR OPERATING AN ENERGY STORING ENERGY GENERATING PLANT
PROCEDE POUR FAIRE FONCTIONNER UNE INSTALLATION GENERATRICE D'ENERGIE

(30) Priorität: 04.07.2002 CH 117702
(43) Veröffentlichungstag der Anmeldung: 06.04.2005
(73) Patentinhaber: Alstom Technology Ltd, 5401 Baden (CH)
(72) Erfinder: ALTHAUS, Rolf, Dr., CH-9230 Flawil (CH); KOLLER, Martin, CH-5400 Baden (CH); WIEDERHOLD, Karl, 76646 Bruchsal (DE)
(86) Internationale Anmeldenummer: PCT/CH2003/000431
(87) Internationale Veröffentlichungsnummer: WO 2004/005685

(56) Entgegenhaltungen:
- CH-A- 329 159
- DE-A- 2 263 051
- US-A- 4 324 987
- US-A- 4 353 214
- US-A- 6 153 943
- PATENT ABSTRACTS OF JAPAN vol. 013, no. 295 (E-783), 7. Juli 1989 (1989-07-07) & JP 01 074027 A (HOKUETSU KOGYO CO LTD), 20. März 1989 (1989-03-20)

## Beschreibung

### Technisches Gebiet

Die vorliegende Erfindung betrifft ein Verfahren zum Betrieb einer Krafterzeugungsanlage gemäss dem Oberbegriff des Anspruchs 1.

### Stand der Technik

Aus der DE 28 22 575 ist eine Luftspeicherturbine bekanntgeworden. In Zeiten niedrigen Energieverbrauches, etwa über Nacht oder am Wochenende, pumpt ein Kompressor als Arbeitsmaschine mit von Grundlastkraftwerken erzeugtem Strom Luft in ein Speichervolumen, etwa eine unterirdische Kaverne in einem Salzstock. Die Kaverne wird dabei beispielsweise auf 100 bar aufgeladen. In Zeiten hohen Strombedarfes oder bei Ausfall eines anderen Kraftwerkes wird mit der gespeicherten Luft eine Luftturbine oder eine kombinierte Luft-/Gas-Turbine angetrieben, welche über einen Generator elektrische Leistung erzeugt. Auf diese Weise wird die Betriebsdauer von Grundlastkraftwerken wesentlich erhöht, und in liberalisierten Strommärkten kann mit der so erzeugbaren Spitzenleistung ein erheblicher Geldzufluss erzielt werden. Weiterhin ist in liberalisierten Strommärkten die Abdeckung transienter Leistungsanforderungen, wie sie beim Zuschalten eines Grossverbrauchers, erst recht aber beim Ausfall eines grossen Kraftwerkblockes auftreten, höchst lukrativ. Bereits mit der reinen Bereithaltung entsprechender Kapazitäten kann sehr viel Geld verdient werden. Beim Ausfall von Stromerzeugungsanlagen ist die Fähigkeit zur Frequenzstützung gefragt. In den ersten Sekundenbruchteilen des Wegfalls eines Stromlieferanten kann in einem grossen Netz ohne weiteres durch die rotierenden Massen der verbleibenden Kraftwerke die Netzfrequenz innerhalb der zulässigen Toleranz gehalten werden. Danach müssen allerdings unmittelbar Leistungsreserven verfügbar sein, um eine Unterfrequenz und damit einen Ausfall des gesamten Netzes zu verhindern. Dampfkraftwerke, die leicht angedrosselt betrieben werden, können Leistung in einer Grössenordnung von rund 5% ihrer Maximalleistung sehr schnell zur Verfügung stellen; für Leistungssteigerungen darüber hinaus bis beispielsweise 30% ihrer Maximalleistung benötigen sie allerdings einige zehn Minuten. Beim Aufschalten eines Grossverbrauchers auf das Netz werden von den Kraftwerken Lastrampen gefordert, bei denen im Sekunden- und einstelligen Minutenbereich die Bereitstellung erheblicher zusätzlicher Leistung gefordert wird. Gasturbinenanlagen und Kombianlagen vermögen derartige Steigerungen im Minutenbereich zu vollziehen. Eine Luftturbine oder kombinierte Luft-/Gasturbine eines Speicherkraftwerks der zitierten Bauart reagiert vergleichbar. Aus der Betriebserfahrung ist weiterhin bekannt, dass derartige schnelle Laständerungen starke Temperaturgradienten und damit einhergehend schädliche thermische Wechselbelastungen und mechanische Spannungen gerade im ohnehin schon thermisch hochbelasteten Heissgaspfad von Gasturbogruppen oder im Dampferzeuger von Dampf- und Kombikraftwerken hervorrufen. Geodätische Wasserkraftwerke sind zwar in der Lage, im Sekundenbereich nennenswerte Leistungsreserven zu mobilisieren; deren Verfügbarkeit ist aber naturgemäss begrenzt.

### Darstellung der Erfindung

Es ist daher Aufgabe der vorliegenden Erfindung, ein Verfahren der eingangs genannten Art anzugeben, welches die Nachteile des Standes der Technik vermeidet. Der Erfindung liegt insbesondere die Aufgabe zugrunde, eine Möglichkeit anzugeben, schnell auf transiente Leistungsanforderungen an eine Krafterzeugungsanlage sowohl bezüglich der Frequenzstützung als auch ganz besonders hinsichtlich schneller Lastrampen zu reagieren.

Erfindungsgemäss wird diese Aufgabe unter Verwendung der Gesamtheit der Merkmale des Anspruchs 1 gelöst.

Kern der Erfindung ist es also, ausgehend von einer Krafterzeugungsanlage, welche aus einer leistungsverbrauchenden Arbeitsmaschine und einer leistungsabgebenden Kraftmaschine besteht, auf Transienten der Leistungsanforderung durch eine entsprechende Anpassung der in der Arbeitsmaschine aufgenommenen Leistung zu reagieren. In der Praxis zeigt sich, dass sich durch Regelung oder gar Abschaltung der Arbeitsmaschine mindestens rund eine Grössenordnung höhere Lastgradienten erzielen lassen als mit einem Regeleingriff auf die Kraftmaschine. In einer bevorzugten Verfahrensvariante wird die Leistungsabgabe der Kraftmaschine in einem ersten Schritt konstant gehalten. Dies hat überdies den Vorteil, dass die Leistungstransiente an sich nicht in einer thermisch hochbelasteten leistungserzeugenden Struktur wirksam wird, sondern an einer deutlich geringer belasteten leistungsaufnehmenden Struktur. Luftspeicheranlagen bieten sich hierzu besonders an, da diese von Haus aus beispielsweise über getrennt angeordnete Turbinen und Verdichter verfügen, sowie über einen Speicher, in dem gespanntes Fluid zum Antrieb der Kraftmaschine zwischengespeichert ist, welches auch beim Stillstand oder bei verminderter Leistung der Arbeitsmaschine zur Verfügung steht. Die Krafterzeugungsanlage befindet sich dabei in einem bestimmten Ausgangs-Betriebszustand, in dem der die Arbeitsmaschine oder gegebenenfalls und bevorzugt auch mehrere Arbeitsmaschinen einen bestimmten Massenstrom eines Energiespeicherfluides, beispielsweise gespannte Luft, in das Speichervolumen der Krafterzeugungsanlage fördert, während gegebenenfalls gleichzeitig eine zweiter Massenstrom des Energiespeicherfluides über die Kraftmaschine entspannt wird; mit Vorteil wird dem Energiespeicherfluid vor und/oder während der Entspannung Wärme zugeführt. Dabei nimmt die Arbeitsmaschine insbesondere über einen elektrischen Antriebsmotor eine Leistung auf und die Kraftmaschine gibt über einen elektrischen Generator eine Leistung ab. Die Netto-Leistungsabgabe der Krafterzeugungsanlage wird als die Differenz zwischen der Leistungsabgabe des Generators und der Leistungsaufnahme des Motors definiert. In einem bevorzugten Ausgangs-Betriebszustand wird die Krafterzeugungsanlage stationär betrieben, in der Art, dass der von der Arbeitsmaschine in das Speichervolumen geförderte Massenstrom dem die Kraftmaschine durchströmenden Massenstrom entspricht. Dies entspricht einem bekannten Gasturbinenprozess, wobei allerdings Turbine und Verdichter nicht starr gekoppelt sind. In Abhängigkeit von der Netzlast und dem aktuell zu erzielenden oder zu zahlenden Strompreis kann der Ausgangs-Betriebszustand aber auch ein Entladebetrieb sein, bei dem der aus dem Speicher abströmende Massenstrom grösser als der von der Arbeitsmaschine geförderte Massenstrom ist, oder ein Ladebetrieb, in dem der Speicher aufgeladen wird. Dabei kann ohne Weiteres die Kraftmaschine auch im Ausgangs-Betriebszustand stillstehen, was einer deutlich negativen Netto-Leistungsabgabe entspricht.

Ein Ausgangs-Betriebszustand, bei dem die maximale Fähigkeit zur sprunghaften Leistungserhöhung für eine Frequenzstützung vorliegt, ist ein Betriebszustand, bei dem alle Arbeitsmaschinen der Krafterzeugungsanlage mit maximaler Leistung betrieben werden. Damit kann die gesamte Leistungsaufnahme der Arbeitsmaschinen - wie unten noch dargestellt durchaus ein mehrfaches der Nennleistung im Gleichgewichtsbetrieb der Krafterzeugungsanlage - prinzipiell durch einfaches Öffnen eines Schalters dem Netz zur Verfügung gestellt werden. In einem zweiten Schritt kann, allerdings schon bedeutend langsamer, die Leistung der Kraftmaschinen erhöht werden, sofern diese im Ausgangs-Betriebszustand nicht bei Maximalleistung betrieben werden. Insofern erscheint ein Ausgangs-Betriebszustand wünschenswert, bei dem die Arbeitsmaschinen mit voller Leistungsaufnahme laufen, und die Kraftmaschinen stillstehen oder sich im Leerlauf befinden. Ein solcher Ausgangs-Betriebszustand bringt zwar absolut gesehen das grösste Leistungssteigerungspotenzial. Allerdings steht der von der Kraftmaschinen aufzubringende Leistungsanteil erst mit einer Verzögerung zur Verfügung, da im Leerlauf betriebene Kraftmaschinen - oder vielmehr deren Generatoren - zunächst mit dem Netz synchronisiert werden müssen. Im Interesse einer maximalen Leistungsdynamik erweist es sich daher als vorteilhaft, die Kraftmaschinen bereits mit dem Netz synchronisiert mit geringer Leistungsabgabe am Netz zu halten. In einem ganz besonders bevorzugten Betriebsverfahren sind daher alle Arbeitsmaschinen mit wenigstens 80% ihrer maximalen Leistungsaufnahme in Betrieb. Gleichzeitig sind alle Kraftmaschinen synchronisiert und am Netz, und werden mit einer möglichst geringen Leistungsabgabe von bevorzugt weniger als 10% oder weniger als 20% ihrer maximalen Leistungsabgabe betrieben; betriebliche Gründe können allerdings auch eine höhere Minimalleistung bedingen. Es ist ausgehend von diesem Ausgangs-Betriebszustand möglich, bei einer schnellen Leistungsanforderung durch Öffnen von Schaltern die Arbeitsmaschinen abzuschalten und gleichzeitig den Kraftmaschinen einen Befehl zur Leistungssteigerung zu erteilen. Die zuvor von den Arbeitsmaschinen aufgenommene Leistung steht dann augenblicklich dem Netz zur Verfügung, und die Leistung der Kraftmaschinen wird mit einer systemimmanenten Verzögerungszeit und insbesondere einem nach oben begrenzten Leistungsgradienten zur Verfügung gestellt, ohne jedoch vorher die Synchronisierung abwarten zu müssen. Die Leistungsdynamik ist damit maximiert.

Erfindungswesentlich ist, dass die Arbeitsmaschine im Ausgangs-Betriebszustand Leistung aufnimmt. Die eigentliche Grundidee der Erfindung ist nämlich darin zu sehen, mittels der in einen Speicher fördernden Arbeitsmaschine einen an sich beliebig abschaltbaren Nebenleistungsverbrauch neben den eigentlichen Leistungskonsumenten in einem Elektrizitätsnetz in der Art eines Bias aufzuprägen, und die Netto-Leistungsabgabe einer Krafterzeugungsanlage bei Bedarf durch eine Verminderung oder durch Abschalten dieses Nebenleistungsverbrauchs praktisch augenblicklich zu erhöhen. Die Leistungsabgabe der Kraftmaschine kann dabei wenigstens in einem ersten Schritt konstant gehalten werden.

Bemerkenswert ist der äusserst grosse Lastregelbereich einer erfindungsgemäss betriebenen Speicheranlage. Wird nämlich von der Faustregel ausgegangen, dass bei einer Gasturbine rund zwei Drittel der Brutto-Turbinenleistung im Verdichter verbraucht werden, lässt sich leicht abschätzen, dass, ausgehend von einem stationären, im Gleichgewicht befindlichen Betrieb der Anlage, 200% der augenblicklichen Netto-Leistungsabgabe augenblicklich durch Abschalten der Kompressoren verfügbar sind! Der gesamte Lastregelbereich der Anlage lässt sich dann - ausgehend von einer Auslegung des Kompressors auf einen stationären Betrieb im Gleichgewicht mit der Kraftmaschine als 100% - überschlägig auf eine Netto-Leistungsabgabe von -200% bis +300% der im Gleichgewichtsbetrieb verfügbaren Nennleistung veranschlagen. Durch eine entsprechend grössere Auslegung des Kompressors lässt sich dieser Bereich auch noch erweitern, wobei ein Teillastbettrieb beispielsweise eines Turbokompressors durch Drehzahlregelung- der Kompressor muss ja nicht netzsynchron betrieben werden - sehr effizient zu bewerkstelligen ist.

In einer Ausführungsform der Erfindung wird die Leistungsaufnahme der Arbeitsmaschine so geregelt, dass bei Änderungen der Leistungsanforderung eines Elektrizitätsnetzes, in dem die Krafterzeugungsanlage betrieben wird, die Summe aus der Leistungsaufnahme der Arbeitsmaschine und der Leistungsanforderung des Netzes konstant bleibt. Die Konstanthaltung dieser maximalen Leistungsabgabe wird bevorzugt auf weniger als 5% der maximalen Leistungsabgabe der Kraftmaschine geregelt.

Selbstverständlich muss auch, beispielsweise, wenn ein sehr grosser Block vom Netz fällt oder ein grosser Verbraucher aufgeschaltet wird, mit Fällen gerechnet werden, in denen die zusätzliche Leistungsanforderung nicht mehr allein durch die Leistungsregelung der Arbeitsmaschinen erfüllt werden kann; in diesen Fällen werden die Arbeitsmaschinen vollständig vom Netz getrennt, und die Kraftmaschine wird im Verbund mit anderen in das Netz integrierten Kraftwerksanlagen auf an sich bekannte Art mit maximalem Leistungsgradienten betrieben. Auch in diesem Falle kann, vorausgesetzt, das Speichervolumen ist hinreichend aufgeladen, sehr schnell und flexibel reagiert werden. Die grösste Flexibilität und die schnellste Reaktion kann im Übrigen erreicht werden, wenn ein Speicherkraftwerk mehrere auf ein Speichervolumen wirkende und einzeln steuerbare Kompressoren sowie mehrere einzeln steuerbare von diesem Speichervolumen gespiessene Turbinen umfasst. Eine Ausführungsform eines Speicherkraftwerkes umfasst vier Verdichterstränge mit je zwei drehzahlgeregelten Turbokompressoren und Zwischenkühlern, sowie zwei Turbinensätze, welche jeweils auf einen Generator wirken; das Speicherkraftwerk wird mit Speicherdrücken im Bereich von 30 bar, bevorzugt wenigstens 50 bar, bis 100 bar betrieben.

Wenn also die Leistungsanforderung an die Krafterzeugungsanlage erhöht wird, wird in einem ersten Schritt die Leistungsaufnahme der Arbeitsmaschine vermindert, während die Leistungsabgabe der Kraftmaschine konstant bleibt, um die Netto-Leistungsabgabe zu erhöhen und gleich der aktuellen Leistungsanforderung einzustellen. In einem zweiten Schritt wird dann die Leistungsabgabe der Kraftmaschine erhöht und die Leistungsaufnahme der Arbeitsmaschine vermindert, wobei die Netto-Leistungsabgabe gleich der aktuellen Leistungsanforderung gehalten wird. Dabei kann ohne weiteres die Leistungsanforderung an die Kraftmaschine und die Leistungsverminderung der Arbeitsmaschine zeitgleich erfolgen, da die Leistungserhöhung durch systemimmanente Faktoren ohnehin leicht verzögert erfolgt.

Wenn die Leistungsanforderung an die Krafterzeugungsanlage vermindert wird, wird in einem ersten Schritt die Leistungsaufnahme der Arbeitsmaschine erhöht, während die Leistungsabgabe der Kraftmaschine konstant bleibt, um die Netto-Leistungsabgabe zu senken und gleich der aktuellen Leistungsanforderung einzustellen. In einem zweiten Schritt wird dann die Leistungsabgabe der Kraftmaschine vermindert und die Leistungsaufnahme der Arbeitsmaschine erhöht, wobei die Netto-Leistungsabgabe gleich der aktuellen Leistungsanforderung gehalten wird.

Für den Langzeitbetrieb der Anlage ergibt sich folgendes mögliche Szenario: In einem initialen Schritt wird das Speichervolumen der Krafterzeugungsanlage beispielsweise über Nacht im Speicherbetrieb aufgeladen. Dabei wird keine Maximalfüllung des Speichervolumens eingestellt, sondern das Speichervolumen wird nur in etwa zur Hälfte - dabei sind Werte zwischen 25% und 75% des Druckbereichs sehr gut akzeptabel - aufgeladen. Diese Zahlenangaben sind so zu verstehen, dass der Druckbereich definiert ist als ein für den Betreib der Krafterzeugungsanlage minimal zulässiger Speicherdruck, welcher als 0% definiert ist, und ein maximal zulässiger Speicherdruck, welcher als 100% des Druckbereichs definiert wird. Dabei ist die Speicherfüllung proportional dem Druck. Die gewählte mittlere Einstellung der Speicherfüllung gewährleistet bei entsprechenden Leistungsanforderungen eine Reaktionsmöglichkeit in Richtung Speicherbetrieb, mit höherer Leistungsaufnahme, und in Richtung Entladebetrieb mit erhöhter Leistungsabgabe. In einem "neutralen" Betrieb wird die Krafterzeugungsanlage wie oben beschrieben im Gleichgewichtszustand betrieben, derart, dass der in das Speichervolumen einströmende Massenstrom gleich dem über die Kraftmaschine abströmenden Massenstrom ist. Es werden zwischen 0% und 100%, bevorzugt 50% bis 100%, der oben definierten Nennleistung netto abgegeben. Die Anlage weist die Möglichkeit auf, durch Leistungsregelung oder Abschalten von Arbeitsmaschinen sofort Leistung zur Verfügung zu stellen. In Spitzenlastzeiten, in denen für den gelieferten Strom hohe Preise gezahlt werden, wird die Anlage im Entladebetrieb betrieben, mit verringerter Leistung der Arbeitsmaschinen und hoher oder voller Leistung der Kraftmaschine. In Zeiten geringer Elektrizitätsnachfrage und entsprechend niedrigem Strompreis kann die Anlage auf Speicherbetrieb gebracht werden, in dem die Kraftmaschinen bei sehr niedriger Leistung betrieben werden oder abgestellt sind, und die Arbeitsmaschinen Speicherfluid in das Speichervolumen liefern. Dies ist soweit der an sich bekannte Betrieb eines Speicherkraftwerkes, beispielsweise eines Luftspeicherkraftwerkes. Jedoch wird gemäss der Erfindung das Speichervolumen nicht vollständig aufgeladen, sondern nur zu maximal 75%. Dies ermöglicht folgende Betriebsweise: In Zeiten, in denen der Netzbetreiber einen hohen Preis für die Bereithaltung der Fähigkeit zur schnellen Reaktion auf Netzanforderungen zahlt, wird die Krafterzeugungsanlage auch bei vergleichsweise hohem Strompreis mit hoher Leistungsaufnahme, beispielsweise mehr als 80%, der Arbeitsmaschinen betrieben. Die Kraftmaschinen sind synchronisiert mit einer zulässigen Minimalleistung, bevorzugt weniger als 20% ihrer Maximalleistung, oder gar mit ihrer Minimumleistung am Netz. Aus betrieblichen Gründen kann die zulässige Minimumleistung aber auch höher liegen; beispielsweise kann die Betriebsgenehmigung der Anlage einen längerfristigen Betrieb auf derart niedrigen Lasten aus verschiedenen Gründen verbieten. Dies trifft einerseits zu, wenn die Krafterzeugungsanlage mit einer zusätzlichen Feuerung in der Kraftmaschine versehen ist, wie im Falle einer kombinierten Luft-/Gas-Turbine. Einerseits sollte die Leistungsabgabe der Kraftmaschine sinnvollerweise so gewählt sein, dass die Feuerung schon in Betrieb ist. Daraus kann sich wiederum die Aufgabenstellung ableiten, die Feuerungsleistung so zu wählen, dass beispielsweise der Ausbrand hinreichend ist, um genehmigte CO- und UHC-Emissionen nicht zu überschreiten. Damit ergibt sich häufig eine betrieblich bedingte relative Minimalleistung, die über den zitierten 20% liegt. Beim beschriebenen Betrieb wird unvollständige Aufladung des Speichervolumens ausgenutzt, da die Anlage ja im Speicherbetrieb arbeitet, und mehr Massenstrom in den Speicher gefördert wird, als ausströmt: Aus diesem Grunde wird der Speicher eben bevorzugt nicht zu 100% gefüllt. Wie oben dargelegt, ermöglicht dieser Ausgangs-Betriebszustand die grösstmögliche Leistungsdynamik. Unter Zugrundelegung der oben angegebenen Zahlenwerte kann durch Abschalten oder geregeltes Abfahren der Arbeitsmaschinen in Sekunden rund 200% der Anlagen-Nennleistung zur Verfügung gestellt werden, und durch Belasten der Kraftmaschine nochmals etwa 300% im Minutenbereich. Wann dieser Betrieb in einem Bereitschaftsmodus gewählt wird, ist in erster Linie eine Frage der Wirtschaftlichkeit.

Wie beschrieben, wird durch die erfindungsgemässe Betriebsweise einer Speicheranlage in hohem Ausmasse durch Vorlastaufschaltung und durch Leistungseinspeisung auf das Netz eingewirkt, derart, dass es durchaus sinnvoll ist, wenn, gerade für Zwecke transienter Operationen, die Kontrolle der Leistungsanforderung vom Anlagenbetreiber auf den Netzbetreiber übergeht.

Weitere vorteilhafte Wirkungen und Ausführungsformen der Erfindung erschliessen sich im Lichte des nachfolgend dargestellten Ausführungsbeispiels oder sind in den Unteransprüchen angegeben.

### Kurze Beschreibung der Zeichnung

Die Erfindung wird nachfolgend anhand von in der Zeichnung illustrierten Ausführungsbeispielen näher erläutert. Im einzelnen zeigen
Figur 1 ein Elektrizitätsnetz mit einem erfindungsgemäss betreibbaren Speicherkraftwerk;
Figur 2 ein Beispiel für die Ausführung eines erfindungsgemäss betreibbaren Speicherkraftwerks;
Figur 3 ein Beispiel für ein Betriebskonzept eines derartigen Speicherkraftwerks in Abhängigkeit von der Netto-Leistungsabgabe; und
Figur 4 ein Beispiel für die erfindungsgemäss erzielbare Dynamik der Leistungsabgabe.

Dabei stellen die dargestellten Ausführungsbeispiele nur einen kleinen instruktiven Ausschnitt der in den Ansprüchen gekennzeichneten Erfindung dar.

### Weg zur Ausführung der Erfindung

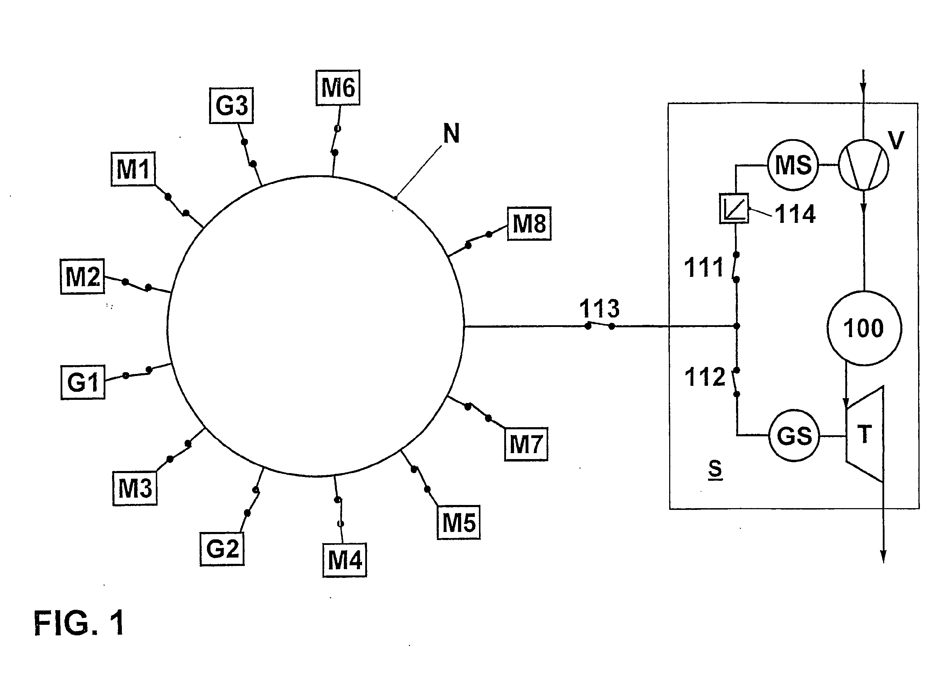

In Figur 1 ist stark schematisiert ein Elektrizitätsnetz N dargestellt. An dem Elektrizitätsnetz sind über Netzschalter 8 Verbraucher, M1 bis M8, und drei Kraftwerke oder deren Generatoren, G1 bis G3, sowie ein Luftspeicherkraftwerk S angeschlossen. Ein derartiges Luftspeicherkraftwerk ist beispielsweise aus der DE 28 22 575 bekanntgeworden, welche Offenbarung einen integrierenden Bestandteil der vorliegenden Erfindung darstellt. Das Luftspeicherkraftwerk S umfasst mindestens einen Verdichter V zum Befüllen eines Speichervolumens 100 mit einem Energiespeicherfluid, sowie eine mit dem Fluid aus dem Speichervolumen 100 betreibbare Turbine T. Die Turbine T treibt einen Generator GS, welcher eine elektrische Leistung erzeugt, die über den Schalter 112 in das Elektrizitätsnetz einspeisbar ist. Der Verdichter V wird von einem Motor MS angetrieben, der über den Schalter 111 und den Regler 114 eine regelbare elektrische Leistung aufnimmt. Die Differenz zwischen der Leistungsabgabe des Generators GS und der Leistungsaufnahme des Motors MS wird als Netto-Leistungsabgabe des Speicherkraftwerks S über den Schalter 113 in das Netz N eingespiessen. Wenn die Leistungsaufnahme des Verdichters V respektive dessen Antriebsmotors MS grösser ist als die im Generator GS erzeugte Leistung, nimmt das Speicherkraftwerk S über den Schalter 113 Leistung aus dem Netz auf. In einem ersten Betriebszustand sind alle Leistungsverbraucher M1 bis M8 und alle Generatoren G1 bis G3 sowie das Speicherkraftwerk S mit dem Netz verbunden. Die Leistungsaufnahme aller Verbraucher M1 bis M8 sowie des Antriebsmotors MS und die Leistungsabgabe aller Kraftwerke G1 bis G3 sowie des Generators GS sind bei einer Netzsollfrequenz ausgeglichen. Wenn nun aus irgendwelchen Gründen eines der Kraftwerke G1 bis G3 durch Öffnen des Netzschalters vom Netz fällt, ist die Leistungsbilanz innerhalb des Netzes eben nicht mehr ausgeglichen, und die Netzfrequenz reagiert darauf mit einem Abfall. Üblicherweise reagieren die noch am Netz befindlichen Kraftwerke darauf, und erhöhen die Leistung so schnell als möglich zur Frequenzstützung. Wie eingangs dargelegt, sind die Fähigkeiten von Kraftwerken zur schnellen Reaktion sehr unterschiedlich ausgeprägt. Weiterhin resultieren derart schnelle Laständerungen von Kraftwerken in strukturellen Belastungen von teuren Kraftwerkskomponenten. Ausserdem müssen die entsprechenden Leistungsreserven vorgehalten werden, was dazu führt, dass teure Investitionen nicht vollständig ausgenutzt werden und Kraftwerke im Normalbetrieb nicht an ihrem besten Betriebspunkt laufen. Insgesamt machen diese Faktoren die Vorhaltung und Erzeugung von Leistung zur Frequenzstützung und zur Erfüllung schneller Lastrampen sehr teuer. Selbstverständlich wäre es aus technischer Sicht eher wünschenswert, bei Ausfall eines Kraftwerks zunächst entsprechende Leistungsverbraucher vom Netz zu nehmen, was aus naheliegenden Gründen nicht so ohne Weiteres möglich ist. Gleichwohl macht die Erfindung eben davon Gebrauch, beispielsweise beim Ausfall von Stromerzeugungskapazitäten Verbraucher vom Netz zu schalten, ohne dabei jedoch einen der zahlenden Verbraucher M1 bis M8 zu tangieren. Dies geschieht durch die nachfolgend beschriebene spezielle Betriebsweise des Speicherkraftwerks S. Wie einleitend beschrieben wird ein dargestelltes Luftspeicherkraftwerk S in Schwachlastzeiten, beispielsweise bei Nacht oder am Wochenende, im Speicherbetrieb betrieben. Schalter 112 ist geöffnet und Schalter 111 ist geschlossen, derart, dass der Motor MS die Arbeitsmaschine, Verdichter, V antreibt, welche Luft oder ein anderes Energiespeicherfluid in das Speichervolumen 100 fördert. Es strömt kein Fluid aus dem Speichervolumen 100 ab. Das Speicherkraftwerk S hat dann nur eine Leistungsaufnahme aus dem Netz. Diese Leistungsaufnahme ermöglicht es, Grundlasteinheiten wie Kernkraftwerke oder auch kohlegefeuerte Dampfblöcke auch in Schwachlastzeiten mit hoher Leistung zu betreiben und so deren hohe Investitionen besser auszunutzen. In Zeiten mittlerer Netzbelastung steht das Speicherkraftwerk S still, und der gesamte Leistungsbedarf wird von den Kraftwerken G1 bis G3 gedeckt, die nahe an ihrem besten Betriebspunkt operieren. In Spitzenlastzeiten wird der Schalter 112 geschlossen und die Turbine T wird von im Speichervolumen 100 gespeichertem Energiespeicherfluid angetrieben, und treibt ihrerseits den Generator GS, von dem aus ein von den Kraftwerken G1 bis G3 nicht abzudeckender Leistungsbedarf ins Netz eingespeist wird. Die Erfindung macht nun von der Erkenntnis Gebrauch, dass auch in Zeiten mittleren und hohen Strombedarfs der Motor MS einer Speicheranlage S als Nebenlast, analog zu einer "Vorspannung" des Elektrizitätsnetzes betrieben werden kann. Die Speicheranlage S wird beispielsweise so betrieben, dass im Normalbetrieb der vom Verdichter V in das Speichervolumen 100 geförderte Massenstrom gleich dem über die Turbine T abströmenden Massenstrom ist. Abhängig vom aktuell zu erzielenden oder zu zahlenden Strompreis kann die Speicheranlage dabei selbstverständlich auch im Speicher- oder im Entladebetrieb arbeiten; entscheidend ist, dass der Motor MS eine Last auf das Elektrizitätsnetz N aufbringt, auch, wenn die Netto-Leistungsabgabe positiv ist, das Speicherkraftwerk S also global betrachtet keine Last darstellt. Bei plötzlichen Veränderungen der Leistungsanforderung an die Speicheranlage S, wie sie beispielsweise und in besonderem Ausmasse beim Ausfall eines der Kraftwerke G1 bis G3 und beim Aufschalten eines Grossverbrauchers auf das Netz auftritt, kann diese Nebenlast wesentlich effizienter und schneller verändert werden als es möglich ist, zusätzliche Leistung bereitzustellen. Wenn zum Beispiel eines der Kraftwerke G1 bis G3 vom Netz gehen muss, wird erfindungsgemäss die Leistungsaufnahme des Motors MS auf einfachem und an sich bekanntem schaltungstechnischem Wege vermindert, oder der Schalter 111 wird ganz geöffnet. Auf diese Weise steht nahezu augenblicklich eine zusätzliche Leistung, welche vorher vom Motor MS aufgenommen wurde, für die Verbraucher M1 bis M8 zur Verfügung. Die Turbine T kann dabei ohne Weiteres mit aus dem Speichervolumen 100 bereitgestelltem Energiespeicherfluid betrieben werden. In einem nächsten Schritt kann beispielsweise die Leistung der Turbine T erhöht oder diese erst in Betrieb genommen werden; zusätzlich können weitere auf das Elektrizitätsnetz wirkende Kraftwerke ihre Leistung erhöhen oder zusätzliche Resourcen auf das Elektrizitätsnetz aufgeschaltet werden, um den initialen Kraftwerksausfall zu kompensieren; sukzessive können dann der Motor MS und damit der Verdichter V der Speicheranlage S wieder in Betrieb genommen werden.

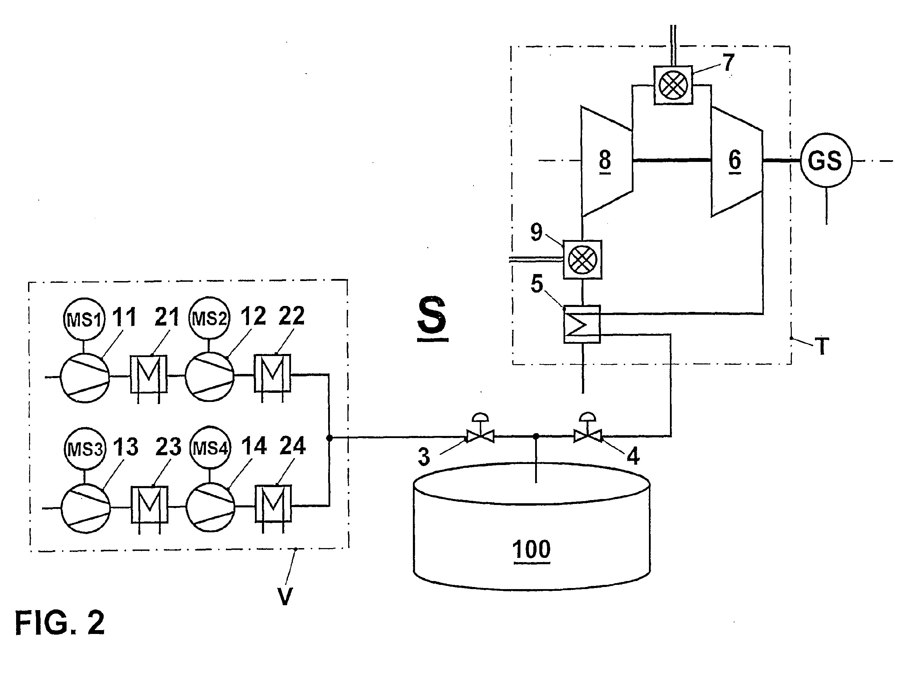

Das Speicherkraftwerk S ist in der Figur 1 stark schematisiert dargestellt. Figur 2 zeigt ein Beispiel für eine Ausführung eines Speicherkraftwerks S. Die Arbeitsmaschine Verdichter V besteht dabei aus zwei Verdichtersträngen mit je zwei Verdichtern und zwei Kühlern. In jedem Verdichterstrang komprimiert ein erster Verdichter 11 oder 13 Luft auf einen Zwischendruck. Die Luft wird in einem Kühler, 21 oder 23, zwischengekühlt, und in einem zweiten Verdichter 12 oder 14 auf einen Enddruck verdichtet, der typischerweise in einem Bereich von 30 bis 100 bar oder 50 bis 100 bar liegt. Die Verdichter werden von Antriebsmotoren MS1, MS2, MS3, und MS4 angetrieben. Die verdichtete Luft strömt durch ein Drossel- und Absperrorgan 3 in das Speichervolumen 100. Gespeicherte Luft strömt über ein Drossel- und Absperrorgan 4 zur Turbineneinheit T. Innerhalb dieser Turbineneinheit T durchströmt die Luft zunächst einen Abgaswärmetauscher 5, wo sie beispielsweise auf 550°C erwärmt wird. Danach wird die Luft in einer Luftturbine 6 auf einen Druck von rund 10 bis 15 bar entspannt. Der Zustand der Luft am Austritt aus der Luftturbine 6 ist durchaus dem Zustand am Verdichteraustritt einer Gasturbogruppe vergleichbar. Aus diesem Grunde können stromab der Luftturbine ganz besonders vorteilhaft die Brennkammer 7 und die Turbine 8 einer Gasturbogruppe angeordnet werden. Auf an sich bekannte Weise wird in der Brennkammer 7 ein Brennstoff in der Luft verbrannt, wobei ein gespanntes Heissgas entsteht, das in der Turbine 8 arbeitsleistend in etwa auf Umgebungsdruck entspannt wird. Das entspannte Heissgas wird optional in einem weiteren Brenner 9 nacherhitzt, und durchströmt dann den Abgaswärmetauscher 5, in dem die Restwärme des Abgases auf die Zuluft der Luftturbine 6 übertragen wird. Die Luftturbine 6 und die Gasturbine 8 der Turbineneinheit sind auf einer gemeinsamen Welle angeordnet, und treiben den Generator GS an. Im Gegensatz zu einer herkömmlichen Gasturbogruppe sind Verdichter und Turbine mechanisch vollständig voneinander entkoppelt, und aufgrund des im Strömungsweg zwischengeschalteten Speichervolumens weist auch die fluidmechanische Kopplung eine gewisse Elastizität auf. Dies ermöglicht es, die Turbineneinheit T und die Verdichtereinheit V unabhängig voneinander zu betreiben, und derart, wie oben beschrieben, über zwei Mechanismen, nämlich über die Leistungsaufnahme der Verdichtereinheit und die Leistungsabgabe der Turbineneinheit, höchst flexibel auf unterschiedliche Leistungsanforderungen zu reagieren, und insbesondere durch Abschalten von leistungsaufnehmenden Verdichtern die Netto-Leistungsabgabe nahezu schlagartig zu erhöhen. Dabei können die massenstrom-parallel angeordneten Verdichterstränge ebenfalls unabhängig voneinander geregelt werden, was die Leistungsregelung der gesamten Speicheranlage S weiter vereinfacht.

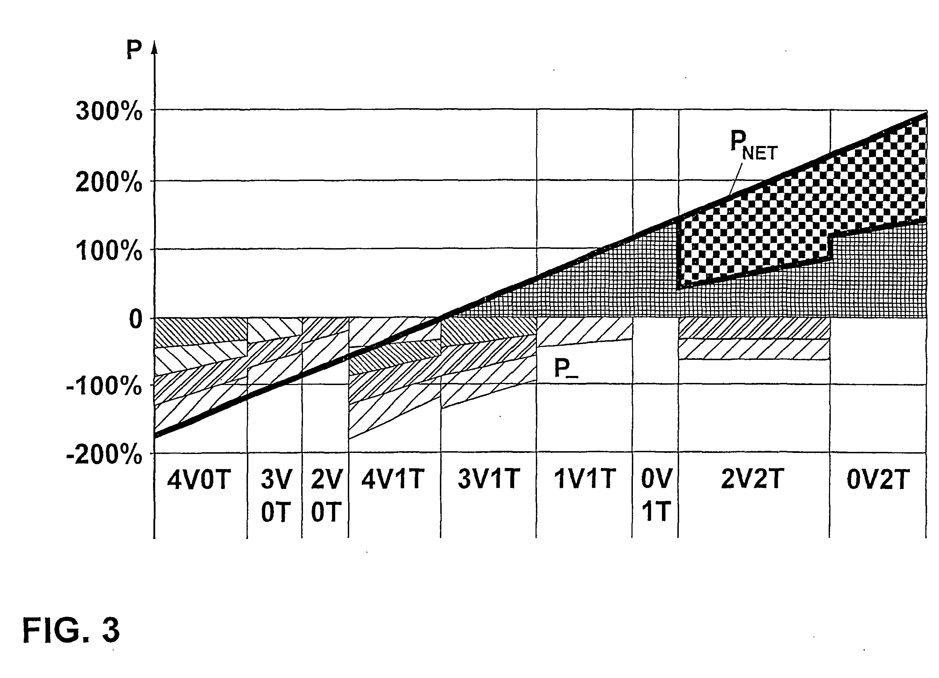

Günstig für die Regelbarkeit der Speicheranlage ist es, wenn eine Mehrzahl von unabhängig regelbaren Verdichtersträngen als Leistungsverbraucher massenstrom-parallel angeordnet ist, und ebenfalls mehrere Turbineneinheiten T als Leistungserzeuger massenstrom-parallel mit einem Speichervolumen verbunden sind. In Figur 3 ist exemplarisch ein Betriebskonzept für ein Speicherkraftwerk mit vier Verdichtersträngen und zwei Turbineneinheiten dargestellt. Dabei ist 100% Leistung als die Netto-Leistungsabgabe P_{NET} definiert, die sich ergibt, wenn beide Turbineneinheiten und alle vier Verdichterstränge bei Maximalleistung im Gleichgewichtszustand bezüglich der Massenbilanz des Speichervolumens 100 arbeiten. Die diagonal das Diagramm durchschneidende und mit P_{NET} bezeichnete Linie stellt die Netto-Leistungsabgabe dar. Der unter 100% liegende mit P. bezeichnete Teil ist die jeweilige Leistungsaufnahme der Verdichter. In einem ersten, mit 4V0T bezeichneten Betriebsbereich, beginnend bei -200% Netto-Leistungsabgabe, also 200% Netto-Leistungsaufnahme, sind alle vier Verdichterstränge und keine der Turbinen in Betrieb. Mit sinkender Leistungsaufnahme wird die Leistungsaufnahme aller vier Verdichterstränge langsam vermindert, bis an einem Punkt einer der Verdichterstränge ausser Betrieb genommen wird. Es arbeiten dann drei Verdichterstränge mit voller Leistungsaufnahme, die ebenfalls langsam zurückgefahren wird; dieser Bereich ist mit 3V0T bezeichnet. Es schliesst sich mit geringerer Netto-Leistungsaufnahme ein Bereich 2VOT an, in dem 2 Verdichterstränge und keine Turbineneinheit betrieben werden. Im weiteren wird eine erste Turbineneinheit in Betrieb genommen, und gleichzeitig werden alle vier Verdichterstränge betrieben. Im Bereich 3V1T sind drei Verdichterstränge und eine Turbineneinheit in Betrieb, im Bereich 1V1T ein Verdichterstrang und eine Turbineneinheit, und so fort. Bei 150% Netto-Leistungsabgabe wird die zweite Turbineneinheit und gleichzeitig zwei Verdichterstränge in Betrieb genommen. Die maximale Spitzenlast-Nettoleistung wird erreicht, wenn beide Turbineneinheiten unter Volllast betrieben werden, und kein Verdichterstrang in Betrieb ist, also im Bereich OV2T. Die Netto-Leistungsabgabe liegt dann bei 300%. Die jeweils unter der 0% dargestellte Leistung ist die jeweilige Leistungsaufnahme der Verdichter, und stellt die Leistung dar, die in der oben beschriebenen Weise sofort als zusätzliche Nettoleistung zur Verfügung gestellt werden kann. Ein Gleichgewichtsbetrieb wird beispielsweise erreicht, wenn beide Turbineneinheiten und alle vier Verdichterstränge unter Volllast laufen, woraus 100% Netto-Leistungsabgabe resultieren; die Leistungsaufnahme der Verdichter beträgt dann 200%; das heisst, gemäss dem erfindungsgemässen Betriebsverfahren ist das Speicherkraftwerk in der Lage, sofort und verzögerungsfrei den Ausfall eines Kraftwerksblockes zu kompensieren, dessen Leistung der doppelten eigenen Nennleistung entspricht! Diese Fähigkeit zur Frequenzstützung und der grosse Regelbereich unterstreichen die Überlegenheit eines erfindungsgemäss betriebenen Speicherkraftwerks.

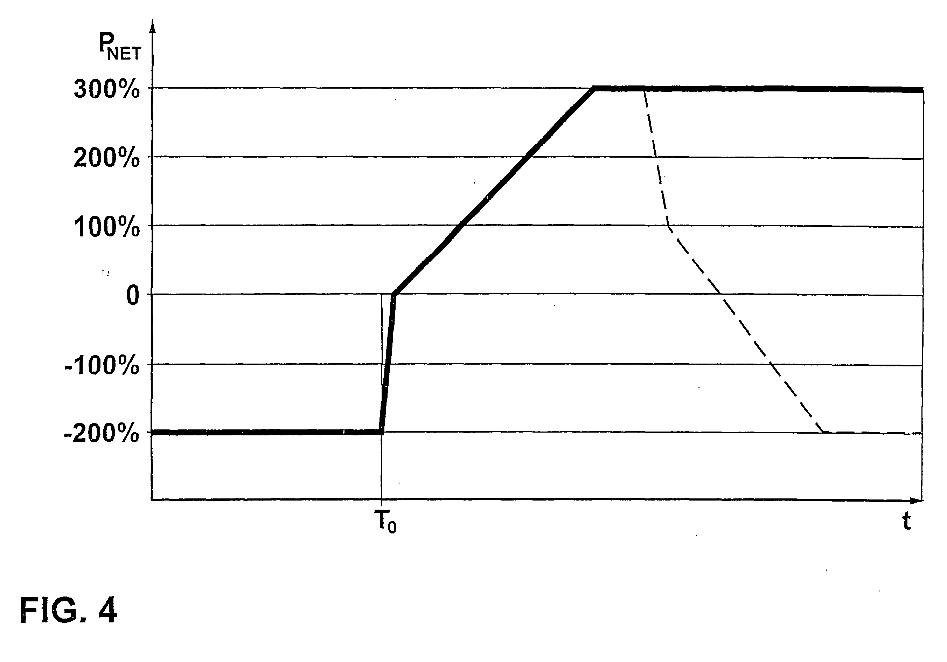

Figur 4 illustriert schematisch die mittels des erfindungsgemässen Verfahrens realisierbare Leistungsdynamik. Auf der senkrechten Diagrammachse ist die Netto-Leistungsabgabe P_{NET} aufgetragen, wobei negative Werte eine Leistungsaufnahme bedeuten, und auf der waagerechten Diagrammachse die Zeit. Es ist ein Ausgangs-Betriebszustand zugrundegelegt, bei dem, wie bereits mehrfach dargestellt, die Arbeitsmaschinen mit voller Leistung laufen, und die Kraftmaschinen gerade eben mit dem Netz synchronisiert sind, oder mit einer sehr geringen Leistung, bis maximal 20% der Maximalleistung, betrieben werden. Weiterhin wird quantitativ angenommen, dass bei stationärem Vollastbetrieb der Kraftmaschinen 2/3 der gesamt erzeugten Leistung zur Kompression des Arbeitsmittels benötigt wird, und dass die Arbeitsmaschinen mit ihrer Maximalleistung auf diesen Betriebspunkt ausgelegt sind. Selbstverständlich wäre es auch möglich, die Arbeitsmaschinen grösser zu dimensionieren, und damit einen noch grösseren Leistungsbereich abzudecken. Beim Ausgangs-Betriebszustand beträgt die Netto-Leistungsabgabe -200%; es wird also Leistung aus dem Netz aufgenommen. Zum Zeitpunkt t=T₀ wird eine maximale Mehrleistung von der erfindungsgemäss betriebenen Krafterzeugungsanlage gefordert. Diese reagiert darauf mit einer Abschaltung der Arbeitsmaschinen, wodurch praktisch augenblicklich 200% Leistung freigesetzt werden; die Netto-Leistungsabgabe ist dann 0%. Selbst bei einem geregelten Abfahren von als Arbeitsmaschinen eingesetzten Kompressoren werden typische Leistungsgradienten um 120% pro Minute, bezogen auf die bereits mehrfach definierte Anlagen-Nennleistung, erreicht! Gleichzeitig wird die Leistungsabgabe der Kraftmaschinen erhöht, was allerdings deutlich langsamer zu einer weiteren Leistungssteigerung bis auf 300% führt. Es muss betont werden, dass die zusätzliche Nutzleistung bei einer Speicheranlage, wie einer Luftspeicheranlage, an sich sehr schnell realisierbar ist, dass diese auf alle Fälle aber mindestens eine Grössenordnung langsamer erfolgt, als es durch die Verminderung oder Abschaltung der Leistungsaufnahme der Arbeitsmaschinen des Speicherkraftwerks möglich ist. Typischerweise kann davon ausgegangen werden dass die Kraftmaschine mit einem Gradienten von rund 15% pro Minute Leistung aufzunehmen vermag. Als gestrichelte Linie ist die Dynamik dargestellt, mit der die Kraftwerksanlage mit Vorteil auf eine sinkende Leistungsanforderung reagieren kann. Dabei wird eine sinkende Netto-Leistungsabgabe zunächst durch ein geregeltes Anfahren der Arbeitsmaschine mit beispielsweise 120% pro Minute realisiert, womit eine Reduktion der Netto-Leistungsabgabe um 200% der Anlagen-Nennleistung in 100 Sekunden realisierbar ist. Bei grösseren Laständerungen wird auch die Leistungsabgabe der Kraftmaschine verändert. Dabei kommt noch ein interessanter Punkt zum Tragen. Mit einer erfindungsgemäss betriebenen Speicheranlage der dargestellten Art können schnell aufeinanderfolgende Lastzyklen von bis 200% der Anlagen-Nennleistung realisiert werden, ohne thermisch hochbelastete Bauteile einer Wechselbeanspruchung aussetzen zu müssen. Die Leistungsregelung kann in dieser Grössenordnung vollumfänglich von den Arbeitsmaschinen übernommen werden. Um deren Temperaturwechselbeanspruchung abzuschätzen wird nochmals auf Figur 2 verwiesen. Bei einem Speicherdruck von angenommenen 100 bar, gleichem Druckverhältnis je in Reihe geschaltetem Verdichter 11 und 12 oder 13 und 14, Verdichtung ab Umgebungszustand bei 15°C, und Zwischenkühlung im Kühler 21, 23 auf Umgebungstemperatur werden unter der Voraussetzung isentroper Verdichtung maximale Temperaturen von wenig mehr als 300°C erreicht, bei einem Speicherdruck von 50 bar noch rund 250°C. Diese Temperaturen sind natürlich deutlich niedriger als die in der Arbeitsmaschine, weshalb Wechselbeanspruchungen die Strukturen wesentlich geringer belasten. Wie oben mehrfach erwähnt, kann durch eine entsprechend grössre Auslegung der Verdichter der alleine durch die Verdichterregelung abzudeckende Leistungsbereich noch vergrössert werden.

Ein zusätzlicher Vorteil des erfindungsgemässen Verfahrens ist darin zu sehen, dass die Technik von Luftspeicherturbinen und deren Anwendung zur Spitzenlastdeckung in der Technik wohlbekannt und ausgereift ist. Beim Aufbau eines erfindungsgemäss zu betreibenden Kraftwerkes kann im Weiteren in einem weiten Umfang auf bewährte Standardkomponenten zurückgegriffen werden.

### Bezugszeichenliste

- 3: Absperr- und Drosselorgan
- 4: Absperr- und Drosselorgan
- 5: Wärmetauscher, Abgaswärmetauscher, Rekuperator
- 6: Luftturbine
- 7: Brennkammer
- 8: Gasturbine
- 9: Zusatzfeuerung
- 11: Verdichter
- 12: Verdichter
- 13: Verdichter
- 14: Verdichter
- 21: Zwischenkühler
- 22: Luftkühler
- 23: Zwischenkühler
- 24: Luftkühler
- 100: Speichervolumen
- 111: Schalter
- 112: Schalter
- 113: Netzschalter
- 114: Regler
- G 1, G2, G3: Kraftwerke
- GS: Generator der Kraftmaschine des Speicherkraftwerks
- M 1, M2, M3, M4, M5, M6, M7, M8: Verbraucher
- MS: Antriebsmotor der Arbeitsmaschine des Speicherkraftwerks
- MS1, MS2, MS3, MS4: Antriebsmotoren der Arbeitsmaschine des Speicherkraftwerks
- S: Speicherkraftwerk
- T: Turbineneinheit, Kraftmaschine
- V: Verdichtereinheit, Arbeitsmaschine
- P_{NET}: Netto-Leistungsabgabe
- P.: Leistungsaufnahme der Arbeitsmaschine

## Patentansprüche

1. Verfahren zum Betrieb einer Krafterzeugungsanlage (S) in einem Elektrizitätsnetz (N), welche Krafterzeugungsanlage umfasst:
wenigstens ein Speichervolumen (100);
wenigstens eine mit in dem Speichervolumen gespeicherten Energiespeicherfluid betreibbare Kraftmaschine (T), welche im Betrieb über einen mit der Kraftmaschine verbundenen Generator (GS), eine Leistung abgibt;
wenigstens eine Arbeitsmaschine (V) zur Förderung von Energiespeicherfluid in das Speichervolumen, welche im Betrieb über einen mit der Arbeitsmaschine verbundenen Motor (MS) eine Leistung aufnimmt; wobei die Netto-Leistungsabgabe (P_{NET}) der Krafterzeugungsanlage die Differenz zwischen der Leistungsabgabe der Kraftmaschine und der Leistungsaufnahme (P_) des Motors ist,
**dadurch gekennzeichnet, dass** bei einer ersten Leistungsanforderung die Krafterzeugungsanlage in einem ersten Betriebszustand betrieben wird, bei dem die Kraftmaschine mit einer ersten Leistungsabgabe betrieben wird und die Arbeitsmaschine mit einer ersten Leistungsaufnahme betrieben wird, und,
dass bei einer Änderungen der Leistungsanforderung auf eine zweite Leistungsanforderung, die Netto-Leistungsabgabe der Krafterzeugungsanlage in einem ersten Schritt durch eine Änderung der Leistungsaufnahme der Arbeitsmaschine an die zweite Leistungsanforderung angepasst wird.

2. Verfahren nach Anspruch 1, **dadurch gekennzeichnet, dass** die Leistungsabgabe der Kraftmaschine in einem ersten Schritt konstantgehalten wird.

3. Verfahren nach einem der vorstehenden Ansprüche, **dadurch gekennzeichnet, dass** die Arbeitsmaschine betrieben wird, um Lastschwankungen des Netzes wenigstens näherungsweise zu kompensieren, dergestalt, dass die Leistungsaufnahme der Arbeitsmaschine so geregelt wird, dass die Summe aus der Leistungsaufnahme der Arbeitsmaschine und der Leistungsanforderung des Netzes wenigstens näherungsweise konstantgehalten wird.

4. Verfahren nach Anspruch 3, **dadurch gekennzeichnet, dass** die Konstanthaltung der summierten Leistungsaufnahme auf weniger als 5% der maximalen Leistungsabgabe der Kraftmaschine geregelt wird.

5. Verfahren nach einem der vorstehenden Ansprüche, wobei die Änderung der Leistungsanforderung eine Erhöhung der Leistungsanforderung ist und in einem ersten Schritt die Leistungsaufnahme der Arbeitsmaschine vermindert wird, **dadurch gekennzeichnet, dass** in einem zweiten Schritt die Leistungsabgabe der Kraftmaschine erhöht und die Leistungsaufnahme der Arbeitsmaschine vermindert wird, wobei die Nettoleistungsabgabe konstant gleich der zweiten Leistungsanforderung gehalten wird.

6. Verfahren nach einem der vorstehenden Ansprüche, wobei die Änderung der Leistungsanforderung eine Verminderung der Leistungsanforderung ist und in einem ersten Schritt die Leistungsaufnahme der Arbeitsmaschine erhöht wird, **dadurch gekennzeichnet, dass** in einem zweiten Schritt die Leistungsabgabe der Kraftmaschine vermindert und die Leistungsaufnahme der Arbeitsmaschine erhöht wird, wobei die Nettoleistungsabgabe konstant gleich der zweiten Leistungsanforderung gehalten wird.

7. Verfahren nach einem der vorstehenden Ansprüche, **dadurch gekennzeichnet, dass** in dem ersten Betriebszustand der Massenstrom des in das Speichervolumen geförderten Energiespeicherfluides und der Massenstrom des aus dem Speichervolumen abströmenden Energiespeicherfluides gleich gross sind.

8. Verfahren nach einem der vorstehenden Ansprüche, wobei die Energieerzeugungsanlage mehrere Arbeitsmaschinen umfasst, welche unabhängig voneinander steuerbar sind, **dadurch gekennzeichnet, dass** bei steigender Leistungsanforderung nacheinender einzelne Arbeitsmaschinen heruntergefahren und/oder abgeschaltet werden, und, dass bei sinkender Leistungsanforderung nacheinender einzelne Arbeitsmaschinen hochgefahren und/oder zugeschaltet werden.

9. Verfahren nach einem der vorstehenden Ansprüche, wobei die Energieerzeugungsanlage mehrere Kraftmaschinen umfasst, welche unabhängig voneinander steuerbar sind, **dadurch gekennzeichnet, dass** bei steigender Leistungsanforderung nacheinender einzelne Kraftmaschinen hochgefahren und/oder zugeschaltet werden, und, dass bei sinkender Leistungsanforderung nacheinender einzelne Kraftmaschinen heruntergefahren und/oder abgeschaltet werden.

10. Verfahren nach einem der vorstehenden Ansprüche, **dadurch gekennzeichnet, dass** zur Bereithaltung einer maximalen Leistungsdynamik alle Arbeitsmaschinen mit wenigstens jeweils 80% ihrer maximalen Leistungsaufnahme berieben werden, und, dass die Generatoren aller Kraftmaschinen mit dem Netz synchronisiert und verbunden sind, wobei die Kraftmaschinen jeweils mit einer zulässigen Minimalleistung betrieben werden.

11. Verfahren nach Anspruch 10, **dadurch gekennzeichnet, dass** die Kraftmaschinen mit weniger als 20%, bevorzugt weniger als 10%, ihrer maximalen Leistungsabgabe betrieben werden

12. Verfahren nach einem der vorstehenden Ansprüche, **dadurch gekennzeichnet, dass** die Leistungsanforderung vom Netzbetreiber vorgegeben wird.

## Claims

1. Method for operation of a power generation plant (S) in an electricity network (N), which power generation plant comprises:
at least one storage volume (100);
at least one power source (T) which can be operated with energy storage fluid which is stored in the storage volume and which, during operation, emits power via a generator (GS) which is connected to the power source;
at least one process machine (V) for feeding energy storage fluid into the storage volume and which consumes power during operation via a motor (MS) which is connected to the process machine;
with the net power output (P_{NET}) of the power generation plant being the difference between the power emitted by the power source and the power consumption (P_) of the motor,
**characterized in that**, for a first power demand, the power generation plant is operated in a first operating mode, in which the power source is operated at a first power output, and the process machine is operated with a first power consumption, and
**in that**, in the event of any changes in the power demand to a second power demand, the net power output of the power generation plant is in a first step matched to the second power demand by changing the power consumption of the process machine.

2. Method according to claim 1, **characterized in that**, in a first step, the power emitted by the power source is kept constant.

3. Method according to one of the preceding claims, **characterized in that** the process machine is operated in order to at least approximately compensate for load fluctuations in the network, such that the power consumption of the process machine is controlled such that the sum of the power consumption of the process machine and the power demand from the network is kept at least approximately constant.

4. Method according to claim 3, **characterized in that** the constancy of the total power consumption is regulated to less than 5% of the maximum power output of the power source.

5. Method according to one of the preceding claims, in which the change in the power demand is an increase in the power demand and, in a first step, the power consumption of the process machine is reduced, **characterized in that**, in a second step, the power output of the power source is increased and the power consumption of the process machine is reduced, with the net power output being kept constant and equal to the second power demand.

6. Method according to one of the preceding claims, in which the change in the power demand is a reduction in the power demand and, in a first step, the power consumption of the process machine is increased, **characterized in that**, in a second step, the power output of the power source is reduced and the power consumption of the process machine is increased, with the net power output being kept constant and equal to the second power demand.

7. Method according to one of the preceding claims, **characterized in that**, in the first operating state, the mass flow of the energy storage fluid which is fed to the storage volume and the mass flow of the energy storage fluid which flows out of the storage volume are of equal magnitude.

8. Method according to one of the preceding claims, in which the power generation plant comprises two or more process machines which can be controlled independently of one another, **characterized in that**, when the power demand rises, individual process machines are decelerated and/or shut down successively, and **in that**, when the power demand falls, individual process machines are accelerated and/or connected successively.

9. Method according to one of the preceding claims, in which the power generation plant comprises two or more power sources which can be controlled independently of one another, **characterized in that**, when the power demand rises, individual power sources are accelerated and/or connected successively, and **in that**, when the power demand falls, individual power sources are decelerated and/or shut down successively.

10. Method according to one of the preceding claims, **characterized in that**, in order to maintain the maximum power dynamic response, all the process machines are each operated at at least 80% of their maximum power consumption, and **in that** the generators of all the power sources are synchronized and connected to the network, with the power sources each being operated at the minimum permissible power.

11. Method according to claim 10, **characterized in that** the power sources are operated at less than 20%, and preferably less than 10%, of their maximum power output.

12. Method according to one of the preceding claims, **characterized in that** the power demand is predetermined by the network operator.

## Revendications

1. Procédé pour faire fonctionner un équipement de production d'énergie (S) dans un réseau électrique (N), lequel équipement de production d'énergie comprend :
au moins un volume d'accumulation (100) ;
au moins une machine motrice (T) pouvant fonctionner avec le fluide accumulateur d'énergie accumulé dans le volume d'accumulation, laquelle, en fonctionnement, délivre une puissance par le biais d'un générateur (GS) relié avec la machine motrice ;
au moins une machine productrice de travail (V) pour le transport du fluide accumulateur d'énergie dans le volume d'accumulation, laquelle, en fonctionnement, absorbe une puissance par le biais d'un moteur (MS) relié avec la machine productrice de travail ;
la puissance délivrée nette (P_{NET}) de l'équipement de production d'énergie étant la différence entre la puissance délivrée par la machine motrice et la puissance consommée (P_) du moteur ;
**caractérisé en ce** lors d'une première demande de puissance, l'équipement de production d'énergie fonctionne dans un premier état de fonctionnement dans lequel la machine motrice fonctionne avec une première puissance délivrée et la machine productrice de travail fonctionne avec une première puissance consommée et
en ce qu'en cas de modification de la demande de puissance en une deuxième demande de puissance, la puissance délivrée nette de l'équipement de production d'énergie est adapté dans une première étape à la deuxième demande de puissance en modifiant la puissance consommée de la machine productrice de travail.

2. Procédé selon la revendication 1, **caractérisé en ce que** la puissance délivrée de la machine motrice est maintenue constante dans une première étape.

3. Procédé selon l'une des revendications précédentes, **caractérisé en ce que** la machine productrice de travail, pour compenser au moins approximativement les fluctuations de charge du réseau, fonctionne de telle sorte que la puissance consommée par la machine productrice de travail est régulée de sorte que la somme de la puissance consommée par la machine productrice de travail et la demande de puissance du réseau soit au moins approximativement maintenue constante.

4. Procédé selon la revendication 3, **caractérisé en ce que** le maintien à un niveau constant de la puissance consommée additionnée est régulé à moins de 5 % de la puissance délivrée maximale de la machine motrice.

5. Procédé selon l'une des revendications précédentes, la modification de la demande de puissance étant une augmentation de la demande de puissance et la puissance consommée de la machine productrice de travail étant diminuée dans une première étape, **caractérisé en ce que** dans une deuxième étape, la puissance délivrée par la machine motrice est augmentée et la puissance consommée par la machine productrice de travail est réduite, la puissance délivrée nette étant maintenue constante égale à la deuxième demande de puissance.

6. Procédé selon l'une des revendications précédentes, la modification de la demande de puissance étant une diminution de la demande de puissance et la puissance consommée de la machine productrice de travail étant augmentée dans une première étape, **caractérisé en ce que** dans une deuxième étape, la puissance délivrée par la machine motrice est diminuée et la puissance consommée par la machine productrice de travail est augmentée, la puissance délivrée nette étant maintenue constante égale à la deuxième demande de puissance.

7. Procédé selon l'une des revendications précédentes, **caractérisé en ce que** dans le premier état de fonctionnement, le débit massique du fluide accumulateur d'énergie transporté dans le volume d'accumulation et le débit massique du fluide accumulateur d'énergie transporté hors du volume d'accumulation sont égaux.

8. Procédé selon l'une des revendications précédentes, l'équipement de production d'énergie comprenant plusieurs machines productrices de travail qui peuvent être commandées indépendamment les unes des autres, **caractérisé en ce qu'**en présence d'un accroissement de la demande de puissance, les machines productrices de travail sont arrêtées et/ou déconnectées les unes après les autres et qu'en présence d'une diminution de la demande de puissance, les machines productrices de travail sont mises en marche et/ou connectées les unes après les autres.

9. Procédé selon l'une des revendications précédentes, l'équipement de production d'énergie comprenant plusieurs machines motrices qui peuvent être commandées indépendamment les unes des autres, **caractérisé en ce qu'**en présence d'un accroissement de la demande de puissance, les machines motrices sont mises en marche et/ou connectées les unes après les autres et qu'en présence d'une diminution de la demande de puissance, les machines motrices sont arrêtées et/ou déconnectées les unes après les autres.

10. Procédé selon l'une des revendications précédentes, **caractérisé en ce que** pour conserver une dynamique de puissance maximale, toutes les machines productrices de travail fonctionnent respectivement avec au moins 80 % de leur puissance consommée maximale et que les générateurs de toutes les machines motrices sont synchronisés et reliés avec le réseau, les machines motrices fonctionnant à chaque fois avec une puissance minimale admissible.

11. Procédé selon la revendication 10, **caractérisé en ce que** les machines motrices fonctionnent avec moins de 20 %, de préférence avec moins de 10 % de leur puissance délivrée maximale.

12. Procédé selon l'une des revendications précédentes, **caractérisé en ce que** la demande de puissance est préalablement indiquée par l'exploitant du réseau.
